Europäisches Patentamt

European Patent Office

Office européen des brevets

(11) Veröffentlichungsnummer : **0 153 273**
**B1**

(12) **EUROPÄISCHE PATENTSCHRIFT**

(45) Veröffentlichungstag der Patentschrift :
06.07.88

(21) Anmeldenummer : 85730017.2

(22) Anmeldetag : 06.02.85

(51) Int. Cl.⁴ : **B 22 C 1/00**, B 22 C 1/16,
B 22 C 1/20

(54) Unter Polyurethanbildung kalthärtendes Formstoff-Bindemittel.

(30) Priorität : 10.02.84 DE 3405180

(43) Veröffentlichungstag der Anmeldung :
28.08.85 Patentblatt 85/35

(45) Bekanntmachung des Hinweises auf die Patenterteilung : 06.07.88 Patentblatt 88/27

(84) Benannte Vertragsstaaten :
AT BE CH DE FR GB IT LI LU NL SE

(56) Entgegenhaltungen :
FR-A- 1 565 500
US-A- 3 792 012

(73) Patentinhaber : Hüttenes-Albertus Chemische-Werke GmbH
Wiesenstrasse 23-64
D-4000 Düsseldorf-Heerdt 11 (DE)

(72) Erfinder : Torbus, Marek, Dr. Dipl.-Chem.
Merowinger Strasse 131
D-4000 Düsseldorf 11 (DE)

(74) Vertreter : Eikenberg & Brümmerstedt Patentanwälte
Schackstrasse 1
D-3000 Hannover 1 (DE)

**0 153 273**

## Beschreibung

Bei der Herstellung von Gießerei-Formteilen haben die unter Polyurethanbildung kalthärtenden Bindemittelsysteme eine zunehmende Bedeutung erlangt. Diese Bindemittelsysteme bestehen aus zwei Komponenten, nämlich einem (normalerweise in einem Lösungsmittel gelösten) Polyol mit mindestens zwei OH-Gruppen im Molekül und einem (meistens ebenfalls in einem Lösungsmittel gelösten) Polyisocyanat mit mindestens zwei NCO-Gruppen im Molekül. Die beiden Komponenten, die der Formstoff-Mischung getrennt zugesetzt werden, reagieren in der Formstoff-Mischung zu einem ausgehärteten Polyurethan-Bindemittel, und zwar in Gegenwart von Katalysatoren, welche eine schnelle Umsetzung und damit eine hinreichend kurze Aushärtungszeit gewährleisten. Als Katalysatoren kommen dabei neben anderen Stoffen wie metallorganischen Verbindungen vorwiegend tertiäre Amine in Betracht, die nach der Formung der Formstoff-Mischung als leicht flüchtige Amine mit einem Trägergas in das Formwerkzeug eingeführt werden.

Die Polyol-Komponente ist meistens ein in einem Lösungsmittel gelöstes Kondensationsprodukt von (ggfs. substituierten) Phenolen mit Aldehyden (nachfolgend kurz « Phenolharz » genannt), das einen geringen bis mittleren Kondensationsgrad besitzt und eine größere Anzahl von freien OH-Gruppen im Molekül aufweist. In bestimmten Fällen, insbesondere bei Formteilen für niedrigere Gießtemperaturen, kann die Polyol-Komponente aber auch eine Lösung eines oligomeren, dimeren oder monomeren Phenolkörpers sein, z. B. eines Terphenols, Bisphenols oder Dihydroxybenzols. Für alle diese Polyole steht eine große Anzahl von (im allgemeinen polaren) Lösungsmitteln zur Verfügung. Die Lösungen werden normalerweise auf einen Feststoffgehalt von 40-60 Gew.% eingestellt und können noch übliche Zusätze enthalten.

Als Polyisocyanat-Komponente kommen im Prinzip alle Polyisocyanate mit mindestens zwei NCO-Gruppen im Molekül in Betracht. Bevorzugt sind aromatische Polyisocyanate, für die Diphenylmethan-4,4'-diisocyanat, 2,2',6,6'-Tetramethyldiphenylmethan-4,4'-diisocyanat, Diphenyldimethylmethan-4,4'-diisocyanat und Diphenyl-4,4'-diisocyanat als typische Beispiele genannt seien. Die Polyisocyanate können entweder in reiner Form oder aber gelöst in einem organischen Lösungsmittel (bevorzugt ein Gemisch aromatischer Kohlenwasserstoffe mit einem Siedebereich oberhalb 150 °C) die Polyisocyanat-Komponente bilden. Im Falle einer Lösung liegt die Konzentration des Polyisocyanats im allgemeinen oberhalb von 70 Gew.%.

Zur Herstellung einer Formstoff-Mischung wird ein körniger Formgrundstoff (Quarzsand, Chromitsand, Olivinsand, Circonsand o. dgl.) mit den beiden Bindemittel-Komponenten vermischt, wobei die Mengenverhältnisse der beiden Komponenten etwa im Bereich von 0,5 bis 1,5 Gewichtsteilen Polyisocyanat-Komponente auf 1 Gewichtsteil Polyol-Komponente liegen können und vorzugsweise so bemessen sind, daß sich ein nahezu stöchiometrisches Verhältnis der NCO-Gruppen zu den OH-Gruppen ergibt. Die Formstoff-Mischung wird sodann zu Gießerei-Formteilen verarbeitet, indem sie in ein Formwerkzeug gefüllt, ggfs. verdichtet und danach durch kurzzeitige Begasung mit einem leicht flüchtigen tertiären Amin (Dimethylethylamin, Triethylamin o. dgl.) ausgehärtet wird. Anschließend können die Formteile dem Formwerkzeug entnommen werden.

Die Formteile erhalten bereits während der Begasung eine meßbare Festigkeit (« Anfangsfestigkeit »), die sich nach Beendigung der Begasung langsam auf die Endfestigkeitswerte erhöht. In der Praxis werden dabei möglichst hohe Anfangsfestigkeiten gewünscht, damit die Formteile möglichst sofort nach der Begasung dem Formwerkzeug entnommen werden können und das Werkzeug wieder für einen neuen Arbeitsgang zur Verfügung steht.

Solche ausreichend hohen Anfangsfestigkeiten lassen sich mit reaktiv eingestellten Bindemittelsystemen durchaus erreichen. Eine zu starke Reaktivität des Systems hat aber zur Folge, daß sich die Zeitdauer, während der die mit den beiden Bindemittel-Komponenten vermischte Formstoffmischung vor der Weiterverarbeitung zu Formteilen gelagert werden kann (sog. « Sandlebenszeit ») deutlich verringert. Das ist ein erheblicher Nachteil, denn die Praxis verlangt auch ausreichende Sandlebenszeiten, damit eine vorbereitete Charge einer Formstoffmischung nicht vorzeitig unbrauchbar wird. Gute Sandlebenszeiten ergeben sich mit weniger stark reaktiven Bindemittel-Systemen, die dann aber auch wieder zu schlechteren Anfangsfestigkeiten führen. Somit mußte bislang zwischen den Forderungen nach möglichst hoher Anfangsfestigkeit und nach möglichst guter Sandlebenszeit ein meistens unbefriedigender Kompromiß geschlossen werden.

Es ist das Ziel der Erfindung, der Gießereitechnik ein unter Polyurethanbildung kalthärtendes Bindemittelsystem zur Verfügung zu stellen, welches hohe Anfangsfestigkeiten der Formteile mit guten Sandlebenszeiten der Formstoffmischung verbindet und welches einfach und preisgünstig herstellbar ist.

Dieses Ziel wird erfindungsgemäß dadurch erreicht, daß der Polyisocyanat-Komponente des Bindemittels ein Chlorsilan zugesetzt ist, und zwar in einer Menge von 0,01-2 Gew.%, bezogen auf die Polyisocyanat-Komponente (die dabei ein reines Polyisocyanat oder eine Polyisocyanat-Lösung sein kann).

Die Erfindung beruht auf der völlig unerwarteten Erkenntnis, daß ein Zusatz von geringen Mengen eines Chlorsilans zur Polyisocyanat-Komponente eine erhebliche Verlängerung der Sandlebenszeit ergibt, ohne daß dies von einem nennenswerten Abfall der Festigkeiten begleitet ist. Diese Wirkung eines Chlorsilan-Zusatzes war nicht vorhersehbar und läßt sich zur Zeit auch noch nicht erklären. Besonders überraschend ist es dabei, daß diese Wirkung auf einen Bereich sehr geringer Zusatzmengen beschränkt ist, denn es wurde gefunden, daß sich bereits Zusatzmengen von 0,01 Gew.% (d. h. im Gewichtsverhältnis Chlorsilan zur Polyisocyanat-Komponente von 1 : 10 000) in einer deutlichen Verlängerung der Sandlebenszeit bemerkbar machen und daß bei Zusatzmengen oberhalb von 2 Gew.% die Wirkung des Chlorsilans wieder verloren geht.

Geeignet für die Zwecke der Erfindung sind grundsätzlich alle Chlorsilane mit mindestens einem Chloratom im Molekül. Aus Gründen der praktischen Handhabbarkeit werden jedoch solche Verbindungen bevorzugt, die bei Zimmertemperatur keine allzu große Flüchtigkeit aufweisen. Dies sind die Siliciumchloride $SiHCl_3$ (Trichlorsilan) und $SiCl_4$ (Tetrachlorsilan), die teilsubstituierten Organochlorsilane der allgemeinen Formel $SiR_xH_yCl_{4-(x+y)}$ sowie die vollsubstituierten Organochlorsilane der allgemeinen Formel $SiR_nCl_{4-n}$, wobei R jeweils für einen aliphatischen Rest mit bis zu 6 C-Atomen oder einen (ggfs. substituierten) Phenylrest steht, x und y entweder 1 oder 2 sind und n eine ganze Zahl von 1 bis 3 ist.

Beispielsweise haben Trimethylchlorsilan, Dimethyldichlorsilan, Methyltrichlorsilan, Tetrachlorsilan, Diethylchlorsilan, Vinyltrichlorsilan und Diphenyldichlorsilan gute Ergebnisse gezeigt. Auch Chlorsilane mit mehr als einem Si-Atom im Molekül können mit Erfolg eingesetzt werden, stehen im allgemeinen aber dem Markt nicht als technisches Handelsprodukt zur Verfügung. Soweit die Chlorsilane bei Zimmertemperatur flüssig sind, werden sie als solche der Polyisocyanat-Komponente zugesetzt, während die bei Zimmertemperatur festen Chlorsilane (z. B. die phenylsubstituierten Typen) zweckmäßig zuvor in dem gleichen Lösungsmittel gelöst werden, das als Lösungsmittel für das Polyisocyanat dient.

Die Erfindung ist bei allen Bindemittelsystemen auf Polyurethan-Basis anwendbar, kann also in Verbindung mit allen üblichen Polyol-Komponenten und Polyisocyanat-Komponenten eingesetzt werden und erfordert auch keine Änderungen in der Herstellung und Verarbeitung der Formstoffmischungen. Die jeweils optimale Menge an Chlorsilan hängt dabei etwas von der Art und der Reaktivität der Polyol-Komponente ab und läßt sich für jeden Einzelfall leicht durch einfache Handversuche ermitteln.

Die nachfolgend beschriebenen und in der Tabelle zusammengefaßten Beispiele erläutern die Erfindung. Dabei bedeutet die Angabe « GT » Gewichtsteile.

In allen Fällen wurden Formstoffmischungen hergestellt, die jeweils aus

100 GT Quarzsand H 33,

1 GT Polyol-Komponente in Form handelsüblicher Lösungen von zwei etwas unterschiedlichen Typen eines OH-gruppenhaltigen Phenolharzes und

1 GT Polyisocyanat-Komponente in Form einer 85 %igen Lösung von Diphenylmethyldiisocyanat in einem Gemisch hochsiedender aromatischer Kohlenwasserstoffe bestanden. Für die erfindungsgemäßen Beispiele enthielt die Polyisocyanat-Komponente zusätzlich noch den in der Tabelle angegebenen Chlorsilan-Zusatz, während in den Vergleichsbeispielen unter sonst gleichen Bedingungen der Polyisocyanat-Komponente kein Chlorsilan zugesetzt wurde. Die so erhaltenen Formstoff-Mischungen wurden nach DIN 52 401 mit einer Schießmaschine zu Prüfkörpern (Kernen) verarbeitet, welche durch kurzzeitige Begasung mit Dimethylisopropylamin gehärtet und dann 10 s lang mit Luft gespült wurden. Bei der anschließenden Untersuchung wurden die in der Tabelle angegebenen Werte ermittelt.

In der Tabelle beziehen sich die Spalten « Mischung sofort verarbeitet » und « Mischung 2 Stunden gelagert » auf die Zeitdauer von der Herstellung der Mischung bis zur Zugabe des Katalysators, d. h. bis zur Begasung. Im ersten Fall wurde die Mischung sofort nach ihrer Fertigstellung verarbeitet, und die erhaltenen Kerne wurden innerhalb von 15 s (sofort) bzw. innerhalb von 1 h und 24 h nach Beendigung des Begasens geprüft. Die sofortige Prüfung liefert dabei die Anfangsfestigkeiten, und die Prüfung nach 1 h bzw. 24 h läßt den Festigkeitsanstieg auf die Endfestigkeit erkennen. Im zweiten Fall liegen den Werten dagegen Formstoffmischungen zugrunde, die zunächst ohne Zusatz des Katalysators zwei Stunden lang gelagert worden sind, bevor in entsprechender Weise die Kerne geschossen und die Werte für die Zeitabhängigkeit der Biegefestigkeit (= Sandlebenszeit) aufgenommen wurden.

Im Beispiel 1 (Vergleichsbeispiel) ist die Polyol-Komponente (Polyol 1) so beschaffen, daß die Formstoffmischung bei sofortiger Verarbeitung zu guten Anfangsfestigkeiten führt und vor der Verarbeitung auch noch eine gewisse Zeit gelagert werden kann, wenngleich sie sich nach zweistündiger Lagerung nicht mehr zu Kernen mit brauchbaren Festigkeiten verarbeiten läßt. Durch den Zusatz von nur 0,05 Gew.% Dimethyldichlorsilan (DMDCS) zur Polyisocyanat-Komponente gemäß dem Erfindungsbeispiel 2 werden jedoch auch nach zweistündiger Lagerung der Formstoffmischung noch sehr gute Festigkeitswerte erreicht, ohne daß sich die Festigkeiten bei sofortiger Verarbeitung der Mischung nennenswert ändern.

Dem Beispiel 3 liegt demgegenüber eine etwas reaktiver eingestellte Polyol-Komponente (Polyol 2) zugrunde, so daß sich bei sofortiger Verarbeitung der Formstoffmischung etwas bessere Anfangsfestigkeiten einstellen. Dafür ist aber die Sandlebenszeit der Mischung entsprechend schlechter, denn nach zwei Stunden ist die Mischung bereits ausgehärtet und damit völlig unbrauchbar. Die zugehörigen Erfindungsbeispiele 4 und 5 lassen erkennen, daß sich auch bei einem solchen Polyol durch Zusatz von Trimethylchlorsilan (TMCS) sehr gute Sandlebenszeiten ergeben und auch nach zweistündiger Lagerung der Mischung noch sehr gute Festigkeitswerte erreicht werden können, ohne daß sich die Festigkeiten

3

**0 153 273**

bei sofortiger Verarbeitung der Mischung nennenswert ändern. Das Polyol 2 erfordert eine etwas höhere Menge an zugesetztem Chlorsilan als das Beispiel 1, wobei der Zusatz von 0,2 Gew.% TMCS (Beispiel 4) der optimalen Zusatzmenge nahekommt. Bei einer Zusatzmenge von 0,4 Gew.% TMCS (Beispiel 5) beginnt sich dagegen bereits der Wirkungsabfall bemerkbar zu machen, der bei zu großen Zusatzmengen an Chlorsilan eintritt.

(Siehe Tabelle Seite 5 f.)

Tabelle

| Lagerzeit | | | Mischung sofort verarbeitet | | | Mischung 2 Stunden gelagert | | |
|---|---|---|---|---|---|---|---|---|
| Prüfung | | | sofort | 1h | 24h | sofort | 1h | 24h |
| Beispiel | Polyol-Komponente | Chlorsilan-Zusatz zur Polyisocyanat-Komponente | Biegefestigkeiten in N/cm² | | | | | |
| 1 | Polyol 1 | – | 300 | 600 | 650 | 100 | 120 | 140 |
| 2 | Polyol 1 | 0,05% DMDCS | 300 | 580 | 650 | 280 | 500 | 600 |
| 3 | Polyol 2 | – | 340 | 520 | 680 | Sand ausgehärtet | | |
| 4 | Polyol 2 | 0,2% TMCS | 340 | 510 | 670 | 300 | 540 | 600 |
| 5 | Polyol 2 | 0,4% TMCS | 340 | 520 | 700 | 280 | 450 | 570 |

0 153 273

# 0 153 273

## Patentansprüche

1. Formstoff-Bindemittelsystem zur Herstellung von Gießerei-Formteilen, dessen Komponenten eine Lösung eines phenolhaltigen Polyols mit mindestens zwei OH-Gruppen im Molekül und ein Polyisocyanat, ggfs. auch in Form einer Lösung, mit mindestens zwei NCO-Gruppen im Molekül sind, die miteinander zu einem kalthärtenden Bindemittel reagieren, dadurch gekennzeichnet, daß der Polyisocyanat-Komponente ein Chlorsilan zugesetzt ist, und zwar in einer Menge von 0,01-2 Gew.%, bezogen auf die Polyisocyanat-Komponente.

2. Formstoff-Bindemittelsystem nach Anspruch 1, dadurch gekennzeichnet, daß der Polyisocyanat-Komponente Trichlorsilan und/oder Tetrachlorsilan zugesetzt ist.

3. Formstoff-Bindemittelsystem nach Anspruch 1, dadurch gekennzeichnet, daß der Polyisocyanat-Komponente mindestens ein teilsubstituiertes Organochlorsilan der allgemeinen Formel $SiR_xH_yCl_{4-(x+y)}$ zugesetzt ist, wobei R für einen aliphatischen Rest mit bis zu 6 C-Atomen oder einen (ggfs. substituierten) Phenylrest steht und x = 1 und y = 2 oder x = 2 und y = 1 ist.

4. Formstoff-Bindemittelsystem nach Anspruch 1, dadurch gekennzeichnet, daß der Polyisocyanat-Komponente mindestens ein vollsubstituiertes Organochlorsilan der allgemeinen Formel $SiR_nCl_{4-n}$ zugesetzt ist, wobei R für einen aliphatischen Rest mit bis zu 6 C-Atomen oder einen (ggfs. substituierten) Phenylrest steht und n eine ganze Zahl von 1-3 ist.

5. Formstoff-Bindemittelsystem nach einem der vorhergehenden Ansprüche, dadurch gekennzeichnet, daß das der Polyisocyanat-Komponente zugesetzte Chlorsilan eine oder mehrere Verbindungen aus der Gruppe Trimethylchlorsilan, Dimethyldichlorsilan, Methyltrichlorsilan, Tetrachlorsilan, Diethylchlorsilan, Vinyltrichlorsilan und Diphenyldichlorsilan umfaßt.

## Claims

1. Mould material binder system for the manufacture of foundry shaped parts, whose components comprise a solution of phenol-containing polyol, with at least two OH-groups per molecule, and a polyisocyanate, if appropriate also in the form of a solution, with at least two NCO-groups per molecule, which react together to form a cold-setting binder, characterised in that a chlorosilane is added to the polyisocyanate components, namely in an amount of between 0.01-2% by weight in relation to the polyisocyanate components.

2. Mould material binder system according to Claim 1, characterised in that trichlorosilane and/or tetrachlorosilane is added to the polyisocyanate components.

3. Mould material binder system according to Claim 1, characterised in that at least one partially substituted organochlorosilane with the general formula $SiR_xH_yCl_{4-(x+y)}$ is added to the polyisocyanate components, where R stands for an aliphatic residue with up to 6 C-atoms or for a phenyl residue (if appropriate substituted) and where x = 1 and y = 2 or x = 2 and y = 1.

4. Mould material binder system according to Claim 1, characterised in that at least one fully-substituted organochlorosilane with the general formula $SiR_nCl_{4-n}$ is added to the polyisocyanate components, where R stands for an aliphatic residue with up to 6 C-atoms or for a phenyl residue (if appropriate substituted) and where n is a whole number between 1-3.

5. Mould material binder system according to one of the previous claims, characterised in that the chlorosilane added to the polyisocyanate components includes one or more compounds from the group trimethylchlorosilane, dimethyldichlorosilane, methyltrichlorosilane, tetrachlorosilane, diethylchlorosilane, vinyltrichlorosilane and diphenyldichlorosilane.

## Revendications

1. Système de liant de matériau de moule pour la fabrication de pièces de moule de fonderie, dont les composants sont une solution de polyols phénoliques comportant au moins deux groupes OH dans la molécule et un polyisocyanate, éventuellement également sous forme de solution, comportant au moins deux groupes NCO dans la molécule, qui réagissent l'un sur l'autre pour donner un liant durcissant à froid, caractérisé en ce qu'au composant polyisocyanate est ajouté un chlorosilane, à savoir une quantité de chlorosilane allant de 0,01 à 2 % en poids par rapport au composant polyisocyanate.

2. Système de liant de matériau de moule suivant la revendication 1, caractérisé en ce qu'au composant polyisocyanate est ajouté du trichlorosilane et/ou du tétrachlorosilane.

3. Système de liant de matériau de moule suivant la revendication 1, caractérisé en ce qu'au composant polyisocyanate est ajouté au moins un organochlorosilane partiellement substitué de formule générale $SiR_xH_yCl_{4-(x+y)}$, dans laquelle R est un reste aliphatique comportant jusqu'à 6 atomes de carbone ou un reste phénylique (éventuellement substitué), et avec x = 1 et y = 2, ou x = 2 et y = 1.

4. Système de liant de matériau de moule suivant la revendication 1, caractérisé en ce qu'au composant polyisocyanate est ajouté au moins un organochlorosilane complètement substitué de formule générale $SiR_nCl_{4-n}$, dans laquelle R est un reste aliphatique comportant jusqu'à 6 atomes de carbone ou un reste phénylique (éventuellement substitué), et n est un nombre entier allant de 1 à 3.

5. Système de liant de matériau de moule suivant l'une des revendications précédentes, caractérisé en ce que le silane chloré ajouté au composant polyisocyanate comprend une ou plusieurs combinaisons dans le groupe triméthylchlorosilane, diméthyldichlorosilane, méthyltrichlorosilane, tétrachlorosilane, diéthylchlorosilane, vinyltrichlorosilane et diphényldichlorosilane.